# EUROPÄISCHE PATENTSCHRIFT

(11) **EP 3 115 566 B1**
(45) Veröffentlichungstag und Bekanntmachung des Hinweises auf die Patenterteilung: **08.05.2019**
(21) Anmeldenummer: 16174551.8
(22) Anmeldetag: 15.06.2016
(51) Int. Cl.: F01N 3/021, F01N 3/023, F01N 3/08, F01N 3/10, F01N 3/20, F01N 3/22, F01N 3/30, F01N 9/00, F01N 13/00

(54) **VERFAHREN ZUR ABGASNACHBEHANDLUNG EINER BRENNKRAFTMASCHINE**
METHOD FOR EXHAUST GAS AFTER-TREATMENT OF AN INTERNAL COMBUSTION ENGINE
PROCEDE DE POST-TRAITEMENT DE GAZ D'ECHAPPEMENT D'UN MOTEUR A COMBUSTION INTERNE

(30) Priorität: 09.07.2015 DE 102015212846
(43) Veröffentlichungstag der Anmeldung: 11.01.2017
(73) Patentinhaber: Volkswagen Aktiengesellschaft, 38440 Wolfsburg (DE)
(72) Erfinder: Paukner, Stefan, 38442 Wolfsburg (DE); Baron von Ceumern-Lindenstjerna, Falk-Christian, 38124 Braunschweig (DE)

(56) Entgegenhaltungen:
- EP-A1- 2 034 149
- DE-A1- 10 162 383
- DE-A1-102011 118 337

## Beschreibung

Die Erfindung betrifft ein Verfahren zur Abgasnachbehandlung einer Brennkraftmaschine.

Die kontinuierliche Verschärfung der Abgasgesetzgebung stellt immer höhere Anforderungen an die motorischen Rohemissionen und an die Abgasnachbehandlung von Brennkraftmaschinen. Mit Einführung der Abgasnorm EU6 wird ein Partikelgrenzwert für Ottomotoren vorgeschrieben. Dies kann dazu führen, das in einigen Modellen der Einsatz eines Ottopartikelfilters nötig wird. Im Fahrbetrieb eines Kraftfahrzeuges mit einem Ottomotor kann sich ein solcher Ottopartikelfilter mit Ruß beladen. Damit das Abgasgegendruckniveau nicht zu weit ansteigt, muss dieser Partikelfilter kontinuierlich oder periodisch regeneriert werden. Um eine thermische Regeneration des Partikelfilters zu ermöglichen, ist ein ausreichendes Temperaturniveau bei gleichzeitigem Vorliegen von Restsauerstoff im Abgas notwendig. Da moderne Ottomotoren normalerweise ohne Sauerstoffüberschuss mit einem stöchiometrischen Verbrennungsluftverhältnis A = 1 betrieben werden, sind dazu zusätzliche Maßnahmen notwendig. Dazu reicht, insbesondere bei in oder am Unterboden eines Fahrzeugs angeordneten Partikelfiltern, das Temperaturniveau im normalen Fahrbetrieb in den meisten Fällen nicht aus, um die zur Einleitung der Partikelfilterregeneration notwendige Regenerationstemperatur zu erreichen. Durch die Abgasgesetzgebung sowie weitere Vorschriften und Kundenwünsche besteht das Ziel, den Kraftstoffverbrauch der Brennkraftmaschine möglichst gering zu halten. Dies führt unter anderen dazu, dass verbrauchsreduzierte Brennverfahren in den Fokus der Motorenentwickler geraten. Eine Möglichkeit zur Verbrauchsreduzierung stellt das Magerbrennverfahren bei einem Ottomotor dar, bei dem die Brennkraftmaschine mit Sauerstoffüberschuss, d.h. mit einem überstöchiometrischen Verbrennungsluftverhältnis λ > 1 betrieben wird. Dadurch können die NOx-Emissionen der Brennkraftmaschine nicht mehr wirksam durch einen Drei-Wege-Katalysator reduziert werden. Hierzu sind zusätzliche Komponenten wie NOx-Speicherkatalysatoren erforderlich. NOx-Speicherkatalysatoren können über die Laufzeit durch Schwefeleinlagerungen vergiftet werden und zumindest einen Teil ihrer Funktionalität einbüßen. Dieser Vorgang ist reversibel und kann durch eine Atmosphäre mit Kraftstoffüberschuss, also einem unterstöchiometrischen Verbrennungsluftverhältnis λ < 1 bei gleichzeitig hohen Temperaturen regeneriert werden.

Aus der DE 10 2004 052 062 A1 sind eine Vorrichtung und ein Verfahren zur Regenerierung von Speicherkatalysatoren bekannt. Dazu wird ein Verbrennungsmotor mit einem unterstöchiometrischen Verbrennungsluftverhältnis betrieben und periodisch Sekundärluft in den Abgaskanal eingebracht. Im unterstöchiometrischen Betrieb werden die Schwefeleinlagerungen aus dem Speicherkatalysator entfernt, durch die Sekundärlufteinbringung wird das Entstehen von H₂S Emissionen unterdrückt.

Aus der EP 2 034 149 A1 sind eine Vorrichtung und ein Verfahren zur Abgasnachbehandlung eines Verbrennungsmotors bekannt. Dabei ist ein Abgaskanal an einen Verbrennungsmotor angeschlossen. In dem Abgaskanal sind ein erster, motornaher Katalysator und ein zweiter, motorferner Katalysator angeordnet, wobei zwischen dem ersten Katalysator und dem zweiten Katalysator eine Sekundärluftvorrichtung vorgesehen ist, welche stromabwärts des ersten Katalysators und stromaufwärts des zweiten Katalysators Sekundärluft in den Abgaskanal einbläst.

Die DE 101 62 383 A1 offenbart ein Verfahren zur Abgasnachbehandlung eines Dieselmotors, in dessen Abgasanlage ein erster NOx-Speicherkatalysator, ein Partikelfilter und stromabwärts des Partikelfilters ein zweiter NOx-Speicherkatalysator angeordnet sind, wobei stromabwärts des ersten NOx-Speicherkatalysator und stromaufwärts des Partikelfilters ein Oxidationskatalysator angeordnet ist. Es ist vorgesehen, dass Kraftstoff stromabwärts des ersten NOx-Speicherkatalysators und stromaufwärts des Oxidationskatalysators in den Abgaskanal eingebracht wird, welcher exotherm mit dem Restsauerstoff im Abgas auf dem Oxidationskatalysator umgesetzt wird, um die Temperatur des Partikelfilters zur Regeneration zu erhöhen.

Der Erfindung liegt nun die Aufgabe zugrunde, eine Entschwefelung eines NOx-Speicherkatalysators und eine Regeneration eines Partikelfilters zu ermöglichen, wobei auch während der Entschwefelung und während der Regeneration weiterhin möglichst wenig Emissionen in die Umwelt gelangen.

Die Aufgabe wird durch ein Verfahren gemäß dem unabhängigen Patentanspruch gelöst.

DieVorrichtung zur Abgasnachbehandlung einer Brennkraftmaschine umfasst einen Abgaskanal, einen im Abgaskanal angeordneten Drei-Wege-Katalysator, eine in Strömungsrichtung des Abgases durch den Abgaskanal stromab des Drei-Wege-Katalysators in dem Abgaskanal angeordnete Einmündung einer Sekundärluftleitung, einen stromab der Einmündung der Sekundärluftleitung angeordneten ersten NOx-Speicherkatalysator sowie einen ebenfalls stromab der Einmündung der Sekundärluftleitung angeordneten Partikelfilter.

Diese Vorrichtung ermöglicht auf vorteilhafte Weise, die Entgiftung des NOx-Speicherkatalysators von Schwefeleinlagerungen mit der Regeneration des Partikelfilters zu verbinden. Durch eine Sekundärlufteinbringung an der Einmündung der Sekundärluftleitung in den Abgaskanal kann bei einem Verbrennungsluftverhältnis für die Brennkraftmaschine, welches unterstöchiometrisch, also fett (λ_{E} < 1) ist, ein beliebiges Mischungsluftverhältnis λₘ vor Eintritt in den NOx-Speicherkatalysator oder den Partikelfilter eingestellt werden. Insbesondere kann das Mischungsluftverhältnis λₘ zwischen einem unterstöchiometrischen Mischungsluftverhältnis λₘ < 1 zur Regeneration der Schwefeleinlagerungen im NOx-Speicherkatalysator und einem überstöchiometrischen Mischungsluftverhältnis λₘ > 1 zur Regeneration des Partikelfilters durch die Menge der eingebrachten Sekundärluft variiert werden. Zudem kann bei der Entschwefelung des NOx-Speicherkatalysators entstehender Schwefelwasserstoff H₂S durch den während der Regeneration des Partikelfilters eingelagerten Sauerstoff aus der Sekundärluft zu Schwefeloxiden oxidiert werden.

In bevorzugter Ausgestaltung der Vorrichtung ist stromauf der Einmündung der Sekundärluftleitung ein zweiter NOx-Speicherkatalysator angeordnet. Bei einem Magerbetrieb der Brennkraftmaschine mit überstöchiometrischem Verbrennungsluftverhältnis können so zumindest an einem der NOx-Speicherkatalysatoren die Betriebsbedingungen, insbesondere die Temperaturbedingungen eingestellt werden, bei dem dieser NOx-Speicherkatalysator eine wirksame Zwischenspeicherung der NOx-Emissionen ermöglicht.

Gemäß einer alternativen Weiterbildung ist vorgesehen, dass der Drei-Wege-Katalysator als Drei-Wege-Katalysator mit einem integrierten NOx-Speicherkatalysator, insbesondere einer NOx-Speicherfunktion, ausgebildet ist. Durch Integration beider Komponenten innerhalb eines Bauteils entfällt ein Konverter, was Kosten, Gewicht und Montageaufwand senkt. Dabei liegt der Schwerpunkt der Aktivität der Komponente vorzugsweise auf Seite der Drei-Wege-Katalyse bei einer gewissen, aber untergeordneten NOx-Speicherfähigkeit. Gegenüber NOx-Speicherkatalysatoren, die ebenfalls in der Regel eine Kombination eines NOx-Speichers und eines Drei-Wege-Katalysators aufweisen und zumeist keine ausreichende Temperaturstabilität für eine motornahe Anordnung aufweisen, ist der bevorzugte Schwerpunkt des vorliegenden Drei-Wege-Katalysators mit integrierter NOx-Speicherfunktion somit genau entgegengesetzt.

Vorzugsweise sind der erste NOx-Speicherkatalysator und der Partikelfilter an einer Unterbodenposition eines mit der Abgasnachbehandlungsvorrichtung ausgestatteten Fahrzeugs angeordnet, also an einer vergleichsweise motorfernen Position. Typischerweise beträgt die mittlere Abgaslauflänge von einem Zylinderauslass bis zum Eintritt in den ersten NOx-Speicherkatalysator und/oder den Partikelfilter mindestens 100 cm, insbesondere mindestens 120 cm. Vorteil der Unterbodenanordnung ist der dort zur Verfügung stehende relativ große Bauraum sowie die geringe thermische Belastung der Komponenten. Demgegenüber sind der Drei-Wege-Katalysator und gegebenenfalls der zweite NOx-Speicherkatalysator an einer motornahen Position nahe eines Abgaskrümmers, insbesondere unmittelbar an einen Verdichter abschließend angeordnet. Die motornahe Anordnung ermöglicht aufgrund der hohen Abgastemperaturen an dieser Stelle ein schnelles Erwärmen und Anspringen dieser Katalysatorkomponenten nach einem Kaltstart.

Ferner ist vorgesehen, dass der Partikelfilter stromab des NOx-Speicherkatalysators angeordnet ist. Dieses ist vorteilhaft, da der NOx-Speicherkatalysator zur Entgiftung der Schwefeleinlagerungen höhere Temperaturen als der Partikelfilter zur Oxidation des Rußes benötigt.

Ferner ist der Partikelfilter als Vier-Wege-Katalysator ausgeführt. Als Vier-Wege-Katalysator wird ein Partikelfilter mit einer drei-wege-katalytischen Beschichtung bezeichnet, der somit die Emissionen von vier gesetzlich limitierten Abgaskomponenten senkt, nämlich Partikel auf der einen sowie Kohlenwasserstoffe HC, Kohlenmonoxid CO und Stickoxide NOx auf der anderen Seite.

In alternativer Ausgestaltung ist der Partikelfilter als ein SCR-Partikelfilter (SCR = selective reduction catalyst) ausgeführt. Hierunter wird ein Partikelfilter mit einer SCR-katalytischen Beschichtung verstanden. SCR-Katalysatoren vermögen Ammoniak NH₃ einzuspeichern. Dabei reduziert das Ammoniak selektiv in der Magerphase der Brennkraftmaschine zu N₂ und trägt somit zum NOx-Umsatz bei. Darüber hinaus kann ein unerwünschter Schlupf von NH₃ aus dem NOx-Speicherkatalysator während seiner Beaufschlagung mit einem fetten Luftverhältnis vermieden werden. Ferner kann das Volumen des ersten (hinteren) NOx-Speicherkatalysators auf diese Weise reduziert werden.

Gemäß einer weiteren, bevorzugten Ausführungsform ist einer der NOx-Speicherkatalysatoren, vorzugsweise der zweite (motornahe) NOx-Speicherkatalysator als Hochtemperatur-NOx-Speicherkatalysator ausgebildet, und der jeweils andere NOx-Speicherkatalysator, vorzugsweise der erste (hintere) NOx-Speicherkatalysator, als Niedertemperatur-Speicherkatalysator. Somit wird ein Teil des gesamten NOx-Speichervermögens der Anlage in Richtung der Auslassventile der Brennkraftmaschine verlagert. Dadurch werden in einer Warmlaufphase der Brennkraftmaschine Stickoxide im zweiten (motornahen) NOx-Speicherkatalysator bei einem höheren Temperaturniveau eingespeichert und regeneriert, wenn der erste (hintere) NOx-Speicherkatalysator seine Betriebstemperatur noch nicht erreicht hat. Das führt zu einer geringeren N₂O-Bildung und einer insgesamt verminderten NOx-Emission.

Gemäß einer vorteilhaften Ausführungsform ist vorgesehen, dass der erste (hintere) NOx-Speicherkatalysator, insbesondere als katalytische Beschichtung, in den Partikelfilter integriert ist. Durch diese Kombination der beiden Unterbodenkomponenten als NOx-Partikelfilter kann der Montageaufwand reduziert werden, da nur ein Bauteil in den Abgaskanal eingesetzt werden muss. Zudem ist ein Partikelfilter mit einer katalytischen Beschichtung leichter als zwei getrennte Bauteile, was das Fahrzeuggewicht senkt und somit zur Verbrauchsreduzierung beiträgt. Darüber hinaus werden die thermischen Verluste in der Abgasanlage reduziert.

Das erfindungsgemäße Verfahren zur Abgasnachbehandlung wie im Verfahrensanspruch 1 beansprucht umfasst unter anderem die Schritte:
a) Anfordern einer Entschwefelung des ersten NOx-Speicherkatalysators und/oder einer Regeneration des Partikelfilters,
b) Betreiben der Brennkraftmaschine mit einem unterstöchiometrischen Verbrennungsluftverhältnis λ_{E} < 1 und Einbringen von Sekundärluft in den Abgaskanal, bis eine vorbestimmte Prozesstemperatur am NOx-Speicherkatalysator und/oder am Partikelfilter erreicht ist,
c) Betreiben der Brennkraftmaschine mit einem unterstöchiometrischen Verbrennungsluftverhältnis λ_{E} < 1, so dass der NOx-Speicherkatalysator mit einem unterstöchiometrischen Luftverhältnis beaufschlagt und entschwefelt wird, und
d) Betreiben der Brennkraftmaschine mit einem unterstöchiometrischen Verbrennungsluftverhältnis λ_{E} < 1 und Einbringen von Sekundärluft in den Abgaskanal, so dass sich eine überstöchiometrisches Mischungsluftverhältnis λₘ > 1 einstellt und der Partikelfilter mit dem überschüssigen Sauerstoff regeneriert wird.

Das Verfahren bietet den Vorteil, dass gleichzeitig eine Entschwefelung des NOx-Speicherkatalysators und eine Regeneration des Partikelfilters erfolgen kann. Dadurch kann das Zeitintervall, in dem die Brennkraftmaschine mit verbrauchsmäßig vergleichsweise ungünstigem, unterstöchiometrischen Verbrennungsluftverhältnis betrieben wird, kurz gehalten werden und somit Kraftstoff gespart werden. Ferner ist kein separates Aufheizen für die Entschwefelung des NOx-Speicherkatalysators und zur Regeneration des Partikelfilters notwendig, da mit dem erfindungsgemäßen Verfahren beide Prozesse parallel ablaufen können. Dabei wird die Brennkraftmaschine (vorzugsweise kontinuierlich) mit einem Verbrennungsluftverhältnis λ_{E} < 1 betrieben und das Mischungsluftverhältnis durch die Sekundärlufteinbringung zwischen λₘ < 1 variiert.

Vorzugsweise wird das Einbringen von Sekundärluft in den Abgaskanal während Schritt c) deaktiviert, so dass das den NOx-Speicherkatalysator beaufschlagende unterstöchiometrische Luftverhältnis dem Verbrennungsluftverhältnis λ_{E} entspricht.

Ferner werden die Verfahrensschritte c) und d) solange wiederholt, bis eine hinreichende Entschwefelung des NOx-Speicherkatalysators und/oder eine hinreichende Regeneration des Partikelfilters erreicht sind. Dabei wird unter "hinreichende Entschwefelung" und "hinreichende Regeneration" das Erzielen einer vorbestimmten untere Grenzen einer Beladung mit Schwefeloxiden des NOx-Speicherkatalysators beziehungsweise einer Beladung mit Partikeln des Partikelfiltern verstanden. Auf diese Weise kann die NOx- beziehungsweise Partikel-Speicherkapazität der beiden Komponenten wieder nahe an die ursprüngliche Kapazität herangeführt werden. Der alternierende Wechsel zwischen dem zur Entschwefelung des NOx-Speicherkatalysators unterstöchiometrischen (fetten) Luftverhältnis mit λₘ < 1 und dem zur Regeneration des Partikelfilters erforderlichen überstöchiometrischen (mageren) Luftverhältnis mit λₘ > 1 wird dabei vorzugsweise durch Veränderung der Sekundärluftmenge bewirkt, wobei die Brennkraftmaschine bevorzugt durchgehend mit einem konstanten oder variierenden unterstöchiometrischen Verbrennungsluftverhältnis λ_{E} < 1 betrieben wird. Insbesondere wird die Sekundärluftzufuhr alternierend aktiviert (Schritt d) und deaktiviert (Schritt c). Der alternierende Betrieb hat weiterhin den Vorteil, dass Schwefelwasserstoff, der in den Phasen der Beaufschlagung des NOx-Speicherkatalysators mit einem fetten Luftverhältnis freigesetzt werden kann, durch den in den mageren Phasen in den NOx-Speicherkatalysator eingelagerten Sauerstoff noch effektiver zu Schwefeldioxid oxidiert wird. Zudem wird in den Intervallen der Regeneration des Partikelfilters die Abgastemperatur aufgrund der Exothermie des Prozesses angehoben, so dass hierdurch einem Abfall der Temperatur in den Intervallen der Entschwefelung des NOx-Speicherkatalysators entgegengewirkt wird. Somit dienen die mageren Regenerationsintervalle der Aufrechterhaltung des erforderlichen Temperaturniveaus.

Nachdem der gewünschte Entschwefelungsgrad beziehungsweise Regenerationsgrad erreicht ist, kann der Normalbetrieb der Brennkraftmaschine wiederaufgenommen werden, wobei diese gemäß ihrem Typ und dem aktuellen Betriebspunkt des Fahrzeugs beispielsweise mit einem stöchiometrischen oder mageren Verbrennungsluftverhältnis betrieben wird.

Das Verbrennungsluftverhältnis λ_{E} der Brennkraftmaschine in den Schritten b), c) und d) kann gleich oder unterschiedlich sein. Besonders vorteilhaft ist dabei, wenn das Verbrennungsluftverhältnis λ_{E} der Brennkraftmaschine im Bereich von 0,85 bis 0,9 liegt. Dadurch wird eine hinreichende Aufheizung der Abgastemperatur bis zu einer Prozesstemperatur von beispielsweise 650°C erreicht. Bei einem leicht fetten Verbrennungsluftverhältnis in diesem Bereich kommt es ferner noch zu keiner signifikanten Partikelbildung, so dass es bei der Aufheizung nicht zu einer verstärkten Beladung des Partikelfilters kommt.

Das Mischungsluftverhältnis λₘ stellt sich nach Vermischen des verbrennungsmotorischen Abgases mit λ_{E} mit der Sekundärluft ein. Besonders vorteilhaft ist, wenn das überstöchiometrische Mischungsluftverhältnis λₘ zur Regeneration des Partikelfilters im Bereich von 1,05 bis 1,2 liegt. Bei einem höheren Sauerstoffgehalt kann es zu einem unkontrollierten Abbrand des Rußes auf dem Partikelfilter und somit zu einer Beschädigung des Partikelfilters kommen.

Ferner kann die Vorrichtung in der Lage sein, das erfindungsgemäße Verfahren zur Abgasnachbehandlung auszuführen. Zu diesem Zweck kann die Vorrichtung insbesondere eine Steuereinrichtung umfassen, in der ein computerlesbarer Programmalgorithmus zur Ausführung des Verfahrens und gegebenenfalls erforderlich Kennfelder gespeichert sind.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Brennkraftmaschine mit einer nicht beanspruchten Vorrichtung zur Abgasnachbehandlung,
- Figur 2: eine Brennkraftmaschine mit einem Ausführungsbeispiel einer Vorrichtung zur Abgasnachbehandlung,
- Figur 3: eine Brennkraftmaschine mit einer nicht beanspruchten Vorrichtung zur Abgasnachbehandlung,
- Figur 4: eine Brennkraftmaschine mit einer nicht beanspruchten Vorrichtung zur Abgasnachbehandlung,
- Figur 5: eine Brennkraftmaschine mit einer nicht beanspruchten Vorrichtung zur Abgasnachbehandlung,
- Figur 6: eine Brennkraftmaschine mit einer nicht beanspruchten Vorrichtung zur Abgasnachbehandlung und
- Figur 7: zeitliche Verläufe des Verbrennungsluftverhältnis λ_{E} der Brennkraftmaschine sowie der Abgastemperatur und des Mischungsluftverhältnis λₘ vor Eintritt in den Unterboden-NOx-Speicherkatalysator aus Figur 1 während der Durchführung des erfindungsgemäßen Verfahrens zur Abgasnachbehandlung eines Verbrennungsmotors mit einer solchen Vorrichtung zur Abgasnachbehandlung.

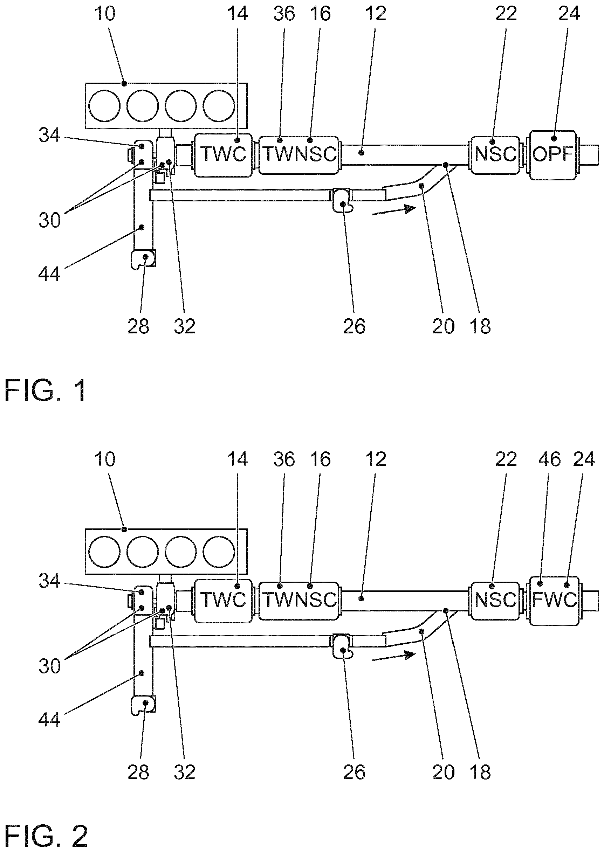

Figur 1 zeigt eine Brennkraftmaschine 10, vorzugsweise einen überwiegend überstöchiometrisch betriebenen Ottomotor, mit einem Abgaskanal 12 und einer Lufteinlassleitung 44.

In dem Abgaskanal 12 ist in Strömungsrichtung eines Abgases der Brennkraftmaschine 10 eine Turbine 32 eines Turboladers 30 zur Luftversorgung der Brennkraftmaschine 10 angeordnet. Stromabwärts der Turbine 32 ist ein erster Drei-Wege-Katalysator 14 angeordnet, dem ein zweiter Drei-Wege-Katalysator 36 mit einem integrierten NOx-Speicherkatalysator 16 nachgeschaltet ist. Die beiden Konverter 14 und 16/36 sind an einer motonahen Position angeordnet, insbesondere unmittelbar an die Turbine 32 anschließend angeordnet. In Strömungsrichtung des Abgas durch den Abgaskanal 12 ist stromab der Drei-Wege-NOx-Speicherkatalysator 16/36 eine Einmündung 18 einer Sekundärluftleitung 20 in den Abgaskanal 12 vorgesehen. Stromab der Einmündung 18 der Sekundärluftleitung 20 ist ein weiterer NOx-Speicherkatalysator 22 mit einem in Strömungsrichtung folgenden Partikelfilter 24 angeordnet. Beide Konverter 22 und 24 sind an einer Unterbodenposition des Fahrzeugs angeordnet.

Die Sekundärluftleitung 20 verbindet die Lufteinlassleitung 44 der Brennkraftmaschine 10 in einem Abschnitt zwischen einem Verdichter 34 des Turboladers 30 und einer Drosselklappe 28 mit dem Abgaskanal 12. In der Sekundärluftleitung 20 ist ein Sekundärluftventil 26 zur Regelung der dem Abgaskanal 12 durch die Sekundärluftleitung 20 zugeführten Luftmenge vorgesehen.

Im Normalbetrieb wird die Brennkraftmasche 10 mit einem stöchiometrischen Verbrennungsluftverhältnis betrieben. Dabei können die Schadstoffe effektiv durch den ersten Drei-Wege-Katalysator 14 im Abgaskanal 12 der Brennkraftmaschine 10 umgesetzt werden. Gleichzeitig werden im Abgas vorhandene Partikel im Partikelfilter 24 zurückgehalten. Alternativ kann die Brennkraftmasche 10 zumindest phasenweise in einem Magerbetrieb betrieben werden. Da bei der Verbrennung auftretende NOx-Emissionen im Magerbetrieb nicht durch den Drei-Wege-Katalysator 14 reduziert werden können, werden diese Emissionen auf andere Weise reduziert. Insbesondere werden sie im hinteren NOx-Speicherkatalysator 22 und im NOx-Speicher 16 des motornahen Drei-Wege-NOx-Speicherkatalysators 36 eingelagert und durch periodische Anfettung des Gemischs für die Brennkraftmaschine 10 regeneriert.

In Figur 2 ist ein Ausführungsbeispiel einer Brennkraftmaschine 10 mit einer Vorrichtung zur Abgasnachbehandlung dargestellt. Bei weitestgehend gleichem Aufbau wie in dem Ausführungsbeispiel zu Figur 1 wird im Folgenden nur auf die Unterschiede eingegangen. Insbesondere ist der Partikelfilter 24 aus Figur 1 durch einen Vier-Wege-Katalysator 46, also einen Partikelfilter 24, der zusätzlich die Funktion eines Drei-Wege-Katalysators aufweist, ersetzt. Durch den Vier-Wege-Katalysator 46 wird erreicht, dass zumindest einer der Katalysatoren 14, 36, 46 eine Drei-Wege-Konvertierung von HC, CO und NOx bei stöchiometrischem Mischungsluftverhältnis durchführen kann und somit eine effektive Abgasreinigung auch während der Entschwefelung des ersten NOx-Speicherkatalysators 22 und/oder der Regeneration des Partikelfilters 24 erreicht wird.

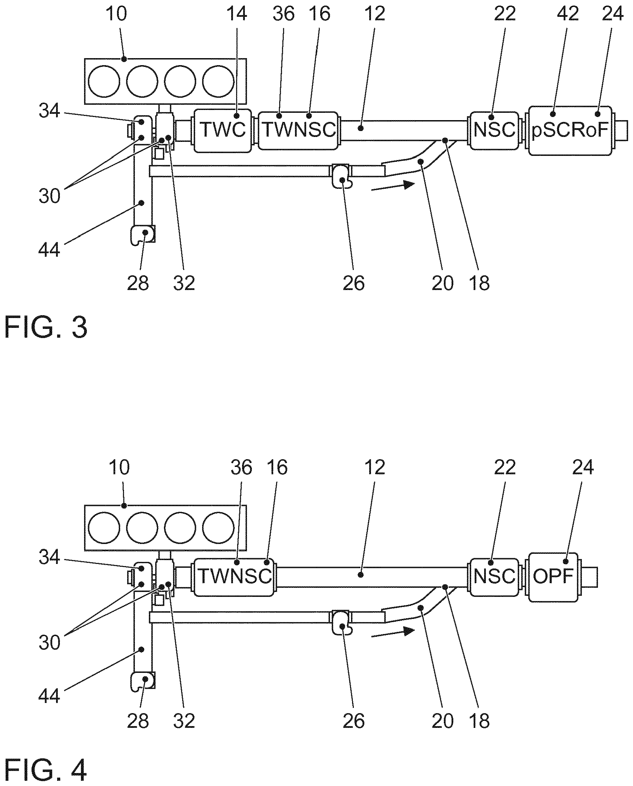

In Figur 3 ist ein weiteres Beispiel einer Brennkraftmaschine 10 mit einer Vorrichtung zur Abgasnachbehandlung dargestellt. Anstelle eines unbeschichteten Partikelfilters 24 aus Figur 1 ist hier ein Partikelfilter vorgesehen, der eine katalytische Beschichtung, nämlich eine SCR-katalytische Beschichtung 42 aufweist.

Gemäß dem in Figur 4 dargestellten Beispiel ist der motornahe Drei-Wege-Katalysator 36 mit einem integrierten NOx-Speicherkatalysator 16 ausgebildet. Hier kann der erste Drei-Wege-Katalysator 14 aus Figur 1 entfallen.

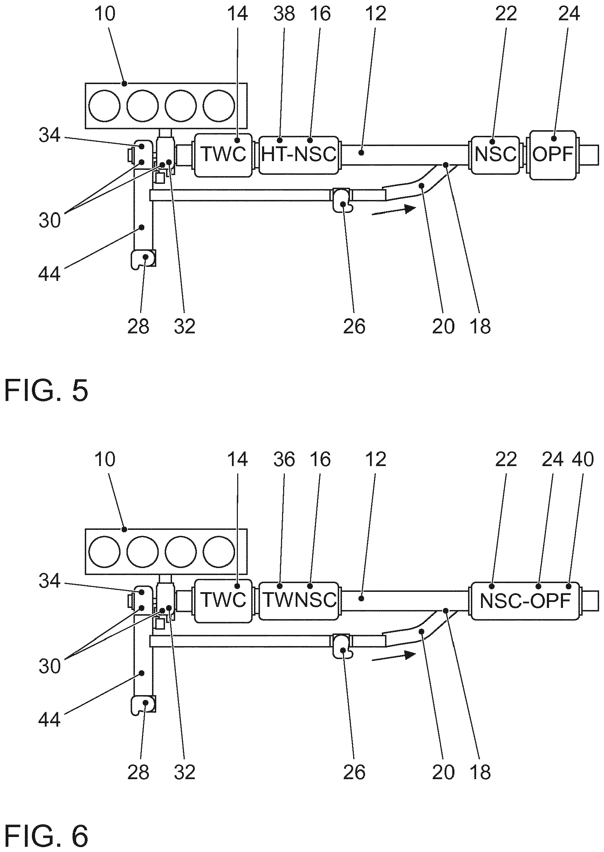

In Figur 5 ist ein weiteres, alternatives Beispiel einer Brennkraftmaschine 10 mit einer Vorrichtung zur Abgasnachbehandlung dargestellt. Bei weitestgehend gleichem Aufbau wie in den Ausführungsformen zu den Figur 1 weist die Vorrichtung anstelle des motornahen Drei-Wege-Katalysators 36 mit integriertem NOx-Speicherkatalysators 16 einen Hochtemperatur-NOx-Speicherkatalysator auf 38. Somit sind im Abgaskanal sowohl ein Hochtemperatur-NOx-Speicherkatalysator 38 sowie der Unterboden-NOx-Speicherkatalysator 22 angeordnet, wobei der Hochtemperatur NOx-Speicherkatalysator 38 eine höhere Temperaturstabilität und eine damit verbundene geringere Neigung zur Alterung aufweist. Dabei können NOx-Emissionen insbesondere in der Warmlaufphase motornah eingespeichert werden, wenn der Unterboden-NOx-Speicherkatalysator noch nicht die notwendige Betriebstemperatur erreicht hat. Somit wird insbesondere in der Warmlaufphase und speziell während einer Regeneration die Bildung von N₂O reduziert, da der vordere NOx-Speicherkatalysator 38 eine höhere Temperatur von beispielsweise 400°C erreicht.

Gemäß Figur 6 sind die beiden Unterbodenkonverter 22 und 24 in einem Bauteil 40 zusammengefasst, das heißt der Partikelfilter 24 weist eine katalytische Beschichtung mit einer NOx-Speicherfunktion 22 auf. Somit sind die Funktionen eines Partikelfilters 24 und eines NOx-Speicherkatalysators 22 in einem kombinierten Bauteil 40 vereint.

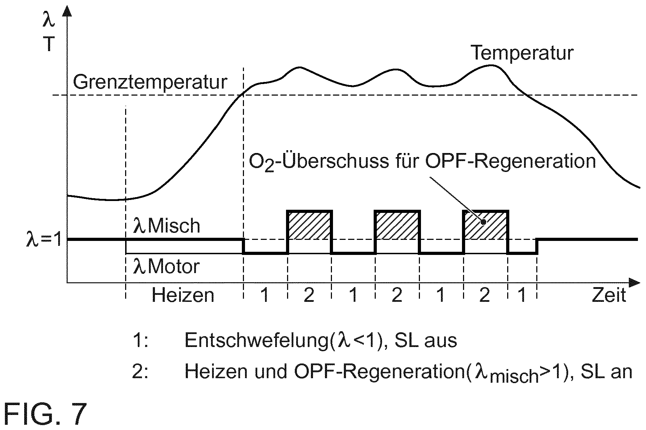

Nachfolgend wird das erfindungsgemäße Verfahren zur Abgasreinigung anhand von Figur 7 unter Bezugnahme auf die Vorrichtung nach Figur 1 erläutert. Das Verfahren umfasst drei, teilweise sich wiederholende Phasen.

Zunächst wird eine Entschwefelungsnotwendigkeit des NOx-Speicherkatalysators 22 von Schwefeleinlagerungen und/oder eine Regenerationsnotwenigkeit des Partikelfilters 24 von Partikeln festgestellt. Beides kann mit herkömmlichen Verfahren erfolgen. Beispielsweise kann die Entschwefelungsnotwendigkeit des NOx-Speicherkatalysators 22 anhand einer nachlassenden NOx-Konvertierungsleistung, insbesondere nach einer erfolgten NOx-Regeneration erfolgen. Die NOx-Konvertierungsleistung kann etwa mit einem nachgeschalteten NOx-Sensor erfasst werden. Die Regenerationsnotwenigkeit des Partikelfilters 24 kann durch eine Differenzdruckmessung stromauf und stromab des Partikelfilters 24 oder durch Modellierung festgestellt werden.

Nach festgestellter Entschwefelungs- und/oder Regenerationsnotwenigkeit wird dann geprüft, ob eine ausreichende Temperatur des Abgases beziehungsweise der Komponenten 22, 24 vorliegt. Je nach Lastzyklus der Brennkraftmaschine 10 und Umgebungstemperatur kann es sein, dass die Abgas- und Bauteiltemperatur am Partikelfilter 24 für eine Regeneration nicht ausreichend hoch genug sind. Für eine schnelle, effektive thermische Regeneration des Partikelfilters 24 sind Temperaturen von ca. 600°C erforderlich. Zur Entschwefelung eines NOx-Speicherkatalysators 22 sind Temperaturen von ca. 650°C notwendig. Sofern, das festgestellte Temperaturniveau nicht vorliegt, wird daher in einer Heizphase zunächst, wie in Figur 7 dargestellt, die Abgastemperatur bis zu einer Grenztemperatur angehoben, die sich an der erforderlichen Regenerationstemperatur am NOx-Speicherkatalysator 22 oder Partikelfilter 24 orientiert. Zur Anhebung der Temperatur wird die Brennkraftmaschine 10 mit einem leicht fetten Gemisch betrieben, so dass ein unterstöchiometrisches Verbrennungsluftverhältnis λ_{E} < 1 vorliegt. Je nach erforderlicher Heizleistung beträgt in der Heizphase das Verbrennungsluftverhältnis λ_{E} beispielsweise 0,85. Gleichzeitig wird über die Sekundärluftleitung 20 Sekundärluft in den Abgaskanal 12 stromauf des NOx-Speicherkatalysators 22 eingebracht. Diese wird über das Ventil 26 so reguliert, dass sich ein stöchiometrisches Mischluftverhältnis von λₘ = 1 einstellt. Der Betrieb mit einem Mischungsluftverhältnis λₘ = 1 führt dazu, das die Heizmaßnahme weitgehend emissionsneutral ausgeführt werden kann. Durch den Umsatz der unverbrannten Kraftstoffanteile im Abgas auf dem NOx-Speicherkatalysator 22 wird unmittelbar in diesem Wärme freigesetzt, so dass eine für die Entschwefelung des NOx-Speicherkatalysators 22 erforderliche Grenztemperatur von beispielsweise ca. 650°C eingestellt werden kann.

Sobald die Grenztemperatur erreicht ist, schließt eine zweite Phase an, in der der NOx-Speicherkatalysator 22 entschwefelt wird. Zur Entschwefelung des NOx-Speicherkatalysators 22 wird die Brennkraftmaschine 10 weiterhin fett betrieben, jetzt jedoch mit einem für die Entschwefelung optimalen, fetten Verbrennungsluftverhältnis von beispielsweise λ_{E} = 0,9. Die Sekundärlufteinbringung in dieser zweiten Phase wird durch Schließen des Sekundärluftventils 26 unterbrochen (deaktiviert), so dass das Verbrennungsluftverhältnis der Brennkraftmaschine 10 dem Mischungsluftverhältnis im Abgaskanal entspricht, also λ_{E} = λₘ = 0,9. Durch die im fetten Abgas vorhandenen Reduktionmittel HC und CO werden die im NOx-Speicherkatalysator 22 eingelagerten Schwefeloxide desorbiert und reduziert.

In einer anschließenden dritten Phase des Verfahrens wird auf ein mageres Mischungsluftverhältnis λₘ>1 umgeschaltet, um den Partikelfilter 24 zu regenerieren. Dazu wird die Brennkraftmaschine 10 weiterhin mit einem unterstöchiometrischen Verbrennungsluftverhältnis λ_{E} < 1 betrieben und das Sekundärluftventil 26 wieder geöffnet, so dass ein Sauerstoffüberschuss im Abgaskanal 12 stromab der Einmündung 18 der Sekundärluftleitung 20 in den Abgaskanal 12 vorliegt. Mit dem überschüssigen Sauerstoff im Abgaskanal wird der auf dem Partikelfilter 24 zurückgehaltene Ruß exotherm oxidiert und der Partikelfilter 24 freigebrannt. Dieses Verfahren gewährleistet, dass gleichzeitig während des Regenerationsprozesses die beiden Unterbodenkomponenten 22 und 24 geheizt werden, so dass die zur Regeneration des Partikelfilters 24 bzw. zur Entschwefelung des NOx-Speicherkatalysators 22 benötigten Temperaturen gehalten werden. Darüber hinaus können in dieser dritten Phase die bei der Entschwefelung des NOx-Speicherkatalysators 22 freigesetzten H₂S-Emissionen umgesetzt werden.

Die Phasen der Entschwefelung des NOx-Speicherkatalysators 22, also die zweite Phase des erfindungsgemäßen Verfahrens, und die Phase der Regeneration des Partikelfilters 24, also die dritte Phase, werden so oft alternierend durchgeführt, bis der NOx-Speicherkatalysator 22 hinreichend entschwefelt ist und der Partikelfilter 24 möglichst vollständig regeneriert ist. Als Maß für die Regeneration des Partikelfilters 24 kann beispielsweise ein Strömungsverlust beim Durchströmen des Partikelfilters 24 dienen, welcher durch eine Differenzdruckmessung im Abgaskanal 12 vor und nach dem Partikelfilter 24 ermittelt wird.

Vorteilhaft an dem Verfahren ist, dass die Brennkraftmaschine 10 weitestgehend drehmomentneutral unterstöchiometrisch mit einem Verbrennungsluftverhältnis λ_{E} < 1 und somit in einem weiten Kennfeldbereich der Brennkraftmaschine 10 durchgeführt werden kann. Darüber hinaus emittieren moderne Ottomotoren bei einer leicht unterstöchiometrischen Verbrennung keine signifikanten Rußmassen. Dadurch wird vermieden, dass der Partikelfilter 24 durch die eingeleitete Maßnahme beschleunigt mit Ruß beladen wird.

In einigen Betriebspunkten der Brennkraftmaschine 10 kann es vorteilhaft sein, eine Ladedruckregelung für den Turbolader 30 anzupassen, um den erforderlichen Druckgradienten zwischen der Lufteinlassleitung 44 und dem Abgaskanal 12 bereitzustellen. Dazu kann es erforderlich sein, dass das Kennfeld der Brennkraftmaschine 10 derart angepasst wird, dass es vorübergehend zu einem reduzierten Wirkungsgrad einer Verbrennung der Brennkraftmaschine kommt, um die Abgasenthalpie der Brennkraftmaschine 10 zu erhöhen.

## Patentansprüche

1. Verfahren zur Abgasnachbehandlung eines Ottomotors (10), mit einem Abgaskanal (12), einem im Abgaskanal (12) angeordneten Drei-Wege-Katalysator (14, 36), einer in Strömungsrichtung des Abgases durch den Abgaskanal (12) stromab des Drei-Wege-Katalysators (14) in dem Abgaskanal (12) angeordneten Einmündung (18) einer Sekundärluftleitung (20), einem stromab der Einmündung (18) der Sekundärluftleitung (20) angeordneten ersten NOx-Speicherkatalysator (22) sowie einem ebenfalls stromab der Einmündung (18) der Sekundärluftleitung (20) angeordneten Partikelfilter (24), wobei der Partikelfilter (24) als Vier-Wege-Katalysator (46) ausgeführt ist, wobei der Partikelfilter (24) stromabwärts des ersten NOx-Speicherkatalysators (22) angeordnet ist, umfassend folgende Schritte:
a) Anfordern einer Entschwefelung des ersten NOx-Speicherkatalysators (22) und/oder einer Regeneration des Partikelfilters (24),
b) Betreiben des Ottomotors (10) mit einem unterstöchiometrischen Verbrennungsluftverhältnis λ_{E} < 1 und Einbringen von Sekundärluft in den Abgaskanal (12), bis eine Prozesstemperatur von mindestens 650°C zur Entschwefelung des NOx-Speicherkatalysators (22) am NOx-Speicherkatalysator (22) erreicht ist,
wobei
c) der Ottomotor (10) mit einem unterstöchiometrischen Verbrennungsluftverhältnis λ_{E} < 1 betrieben wird, sodass der NOx-Speicherkatalysator (22) mit einem unterstöchiometrischen Luftverhältnis beaufschlagt und entschwefelt wird,
d) der Ottomotor (10) mit einem unterstöchiometrischen Verbrennungsluftverhältnis λ_{E} < 1 betrieben wird und gleichzeitig Sekundärluft in den Abgaskanal (12) eingebracht wird, sodass sich ein überstöchiometrisches Mischungsluftverhältnis λₘ > 1 im Abgaskanal stromabwärts der Einmündung (18) der Sekundärluftleitung (20) einstellt und der Partikelfilter (24) mit dem überschüssigen Sauerstoff regeneriert wird, wobei
die Verfahrensschritte c) und d) solange wiederholt werden, bis eine vorbestimmte untere Grenze der Beladung des Partikelfilters (24) und eine entsprechend vorbestimmte Grenze für die Schwefeleinlagerungen auf dem NOx-Speicherkatalysator (22) erreicht ist.

2. Verfahren nach Anspruch 1, **dadurch gekennzeichnet, dass** das unterstöchiometrische Verbrennungsluftverhältnis λ_{E} des Ottomotors (10) in den Schritten b), c) und/oder d) gleich oder unterschiedlich ist und im Bereich von 0,85 bis 0,9 liegt.

3. Verfahren nach einem der Ansprüche 1 oder 2, **dadurch gekennzeichnet, dass** das überstöchiometrische Mischungsluftverhältnis λₘ in Schritt d) im Bereich von 1,05 bis 1,2 liegt.

## Claims

1. A method for exhaust gas after-treatment of a spark-ignition engine (10), with an exhaust gas channel (12), a three-way catalyst (14, 36) arranged in the exhaust gas channel (12), an opening (18) of a secondary air-line (20) arranged in the flow direction of the exhaust gas through the exhaust gas channel (12) downstream of the three-way catalyst (14) in the exhaust gas channel (12), a first NOx storage catalyst (22) arranged downstream of the opening (18) of the secondary air-line (20) and a particle filter (24) also arranged downstream of the opening (18) of the secondary air-line (20), wherein the particle filter (24) is designed as a four-way catalyst (46), wherein the particle filter (24) is arranged downstream of the first NOx storage catalyst (22), comprising the following steps:
a) Request a desulfurization of the first NOx storage catalyst (22) and/or a regeneration of the particle filter (24),
b) Operate the spark-ignition engine (10) with a sub-stoichiometric combustion air ratio λ_{E} < 1 and introduce secondary air into the exhaust gas channel (12), until a process temperature of at least 650 °C is reached at the NOx storage catalyst (22) for the desulfurization of the NOx storage catalyst (22),
wherein
c) the spark-ignition engine (10) is operated with a sub-stoichiometric combustion air ratio λ_{E} < 1, so that the NOx storage catalyst (22) is subjected to a sub-stoichiometric air ratio and is desulfurized,
d) the spark-ignition engine (10) is operated with a sub-stoichiometric combustion air ratio λ_{E} < 1 and at the same time secondary air is introduced into the exhaust gas channel, so that a hyper-stoichiometric mixing air ratio λₘ < 1 is established in the exhaust gas channel downstream of the opening (18) of the secondary air-line (20) and the particle filter (24) is regenerated with the excess oxygen, wherein
the process steps c) and d) are repeated until a predetermined lower limit of the loading of the particle filter (24) and a correspondingly predetermined limit is reached for the sulfur inclusions on the NOx storage catalyst (22).

2. A method according to Claim 1, **characterized in that** the sub-stoichiometric combustion air ratio λ_{E} of the spark-ignition engine (10) in steps b), c) and/or d) is the same or different and is in the range of 0.85 to 0.9.

3. A method according to any one of Claims 1 or 2, **characterized in that** the hyper-stoichiometric mixing air ratio λₘ in step d) is in the range of 1.05 to 1.2.

## Revendications

1. Procédé de post-traitement des gaz d'échappement d'un moteur à essence (10), avec un canal de gaz d'échappement (12), un catalyseur trois voies (14, 36) disposé dans le canal de gaz d'échappement (12), une embouchure (18), disposée en aval du catalyseur trois voies (14) dans le canal de gaz d'échappement (12), dans la direction d'écoulement du gaz d'échappement à travers le canal de gaz d'échappement (12), d'une conduite d'air secondaire (20), un premier catalyseur-accumulateur NOx (22) disposé en aval de l'embouchure (18) de la conduite d'air secondaire (20), ainsi qu'un filtre à particules (24) également disposé en aval de l'embouchure (18) de la conduite d'air secondaire (20), le filtre à particules (24) étant conçu comme un catalyseur quatre voies (46), le filtre à particules (24) étant disposé en aval du premier catalyseur-accumulateur NOx (22), comprenant les étapes suivantes :
a) demande d'une désulfuration du premier catalyseur-accumulateur NOx (22) et/ou d'une régénération du filtre à particules (24),
b) utilisation du moteur à essence (10) avec un rapport d'air de combustion sous-stoechiométrique λ_{E} < 1 et apport d'air secondaire dans le canal de gaz d'échappement (12), jusqu'à ce qu'une température de process d'au moins 650 °C soit atteinte au niveau du catalyseur-accumulateur NOx (22) pour une désulfuration du catalyseur-accumulateur NOx (22),
c) le moteur à essence (10) étant utilisé avec un rapport d'air de combustion sous-stoechiométrique λ_{E} < 1, de façon à ce que le catalyseur-accumulateur NOx (22) soit alimenté et désulfuré avec un rapport d'air sous-stoechiométrique,
d) le moteur à essence étant utilisé avec un rapport d'air de combustion sous-stoechiométrique λ_{E} < 1 et de l'air secondaire étant simultanément introduit dans le canal de gaz d'échappement (12), de façon à ce qu'un rapport d'air de mélange sur-stoechiométrique λₘ > 1 apparaisse dans le canal de gaz d'échappement en aval de l'embouchure (18) de la conduite d'air secondaire (20) et à ce que le filtre à particules (24) soit régénéré avec l'oxygène en excès,
les étapes du procédé c) et d) étant répétées jusqu'à ce qu'une limite inférieure prédéterminée de la charge du filtre à particule (24) et une limite prédéterminée correspondante pour les dépôts de soufre sur le catalyseur-accumulateur NOx (22) soient atteintes.

2. Procédé selon la revendication 1, **caractérisé en ce que** le rapport d'air de combustion sous-stoechiométrique λ_{E} du moteur à essence (10) est identique ou différent dans les étapes b), c) et/ou d) et est de l'ordre de 0,85 à 0,9.

3. Procédé selon l'une des revendications 1 ou 2, **caractérisé en ce que** le rapport d'air de mélange λₘ à l'étape d) est de l'ordre de 1,05 à 1,2.
